# EUROPEAN PATENT APPLICATION

(11) **EP 1 674 986 A1**
(43) Date of publication of application: **28.06.2006**
(21) Application number: 04792110.1
(22) Date of filing: 06.10.2004
(51) Int. Cl.: G06F 7/00

(54) **DATA PROCESSING DEVICE**

(30) Priority: 17.10.2003 JP 2003357994
(71) Applicant: MATSUSHITA ELECTRIC INDUSTRIAL CO., LTD., Kadoma-shi, Osaka 571-8501 (JP)
(72) Inventor: MOTOZUKA, Hiroyuki c/o Panasonic Mobile, Yokohama-shi, Kanagawa 224-8539 (JP); YAMANAKA, Ryutaro c/o Matsushita Electric Ind., Osaka 571-8501 (JP)
(74) Representative: Grünecker, Kinkeldey, Stockmair & Schwanhäusser Anwaltssozietät
(86) International application number: PCT/JP2004/014754
(87) International publication number: WO 2005/038644

(57) **Abstract**

A reconfigurable data processing apparatus. In this apparatus, many cells A 100 for performing ALU processing and cells B 150 for performing bit processing are arranged, each cell includes n-bit input/output ports and the cells are connected through a network with n-bit buses. Furthermore, when the number of output bits is smaller than n, cell B 150 fixes bits of orders irrelevant to outputs to "0" or "1." When the bussed ALU processing part and bit processing part are combined to perform data processing, this makes it possible to execute ALU processing and bit processing efficiently and realize high-speed, parallel processing.

## Description

### Technical Field

The present invention relates to a reconfigurable data processing apparatus.

### Background Art

In recent years, there is a demand for a reconfigurable data processing apparatus which realizes flexibility (programmability) comparable to that of a DSP (Digital Signal Processor) and high-speed, parallel processing comparable to that of ASIC (Application Specific Integrated Circuit).

In contrast, when a reconfigurable data path is realized using an FPGA (Field Programmable Gate Array), the FPGA needs to be provided with a reconfigurable arithmetic unit for each bit to realize an arbitrary logic function, and therefore it requires a large amount of data for reconfiguration (configuration data), takes a long time for reconfiguration, and slows down the operation speed of the circuit, too.

Therefore, it is considered to realize a reconfigurable data path using an array-type processor in which ALUs (Arithmetic and Logic Unit) are arranged in a matrix form. An array-type processor processes data in bus units such as four bits, eight bits, sixteen bits and thirty-two bits, and therefore has an advantage of realizing higher processing speed compared to realizing a data path using an FPGA and requiring less ALU configuration data.

However, since many applications include not only parts requiring ALU-oriented processing but also parts requiring bit-by-bit processing, and therefore when such an application is installed in an array-type processor, the bit processing parts become a bottleneck, causing a decrease of the processing speed and an increase of necessary resources (the number of ALUs).

Therefore, it may be considered effective to use the ALU processing part and bit processing part in combination.

As a data processing apparatus which combines the conventional ALU processing part and bit processing part, there is a proposal of (1) a structure connecting a bussed sub-array and a non-bussed sub-array (e.g., Patent Document 1) or (2) a structure with all components (processor elements, cells) of an array-type processor including a plurality of arithmetic units having different numbers of processing bits or a structure with buses having a plurality of types of bit widths according to a plurality of arithmetic units (e.g., Patent Document 2).
Patent Document 1: National Publication of International Patent Application No.2002-544700
Patent Document 2: Unexamined Japanese Patent Publication No.2003-076668

### Disclosure of Invention

### Problems to be Solved by the Invention

However, the conventional structure in (1) has a problem that a communication between two sub-arrays becomes a bottleneck and the overall performance deteriorates.

Also, the conventional structure in (2) is provided with buses having a plurality of types of bit widths, which results in a problem that the amount of wiring increases and the utilization rate of buses decreases, the utilization rate of the arithmetic units in the processor element decreases, and the necessary amount of configuration data increases since processing of bit width conversion also needs to be performed by setting a plurality of arithmetic units.

It is therefore an object of the present invention to provide a data processing apparatus provided with reconfigurable data paths capable of efficiently executing ALU processing and bit processing respectively and realizing high-speed, parallel processing.

### Means for Solving the Problem

The data processing apparatus of the present invention adopts a configuration including a plurality of first cells having n-bit (n: natural number) input/output ports and performing ALU processing and one or a plurality of second cells having n-bit input/output ports and performing bit processing, wherein the cells are connected through a network with n-bit buses.

### Advantageous Effect of the Invention

According to the present invention, it is possible to perform a plurality of types of bit operations using a single cell which performs bit processing, efficiently execute ALU processing and bit processing respectively and realize high-speed, parallel processing. As a result, it is possible to simplify the inner structure of the cells and the network, reduce the amount of necessary configuration data, and thereby realize reconfigurable data paths having a small area and operating at high speed.

### Brief Description of Drawings

FIG.1 illustrates an example of cell arrangement/configuration of a data processing apparatus according to an embodiment of the present invention;
FIG.2 illustrates a logic circuit inside cell A of the data processing apparatus according to the above embodiment;
FIG.3 illustrates a logic circuit inside cell B of the data processing apparatus according to the above embodiment;
FIG.4 illustrates a circuit configuration of a convolutional coding circuit;
FIG.5 illustrates a circuit configuration when the convolutional coding circuit shown in FIG.4 is constructed of the data processing apparatus in FIG.1;
FIG.6 illustrates a circuit configuration when the convolutional coding circuit shown in FIG.4 is constructed of the data processing apparatus in FIG.1;
FIG.7 illustrates a logic circuit inside cell B1 in FIG.5 and FIG.6;
FIG.8 illustrates a logic circuit inside cell B2 in FIG.5;
FIG.9 illustrates a logic circuit inside cell B3 in FIG.5;
FIG.10 illustrates a circuit configuration of a CRC calculation circuit;
FIG.11 illustrates a circuit configuration when the CRC calculation circuit shown in FIG.10 is constructed of the data processing apparatus in FIG.1;
FIG.12 illustrates a circuit configuration when the CRC calculation circuit shown in FIG.10 is constructed of the data processing apparatus in FIG.1;
FIG.13 illustrates a logic circuit inside cell B1 in FIG.11; .
FIG.14 illustrates a logic circuit inside cell B2 in FIG.11;
FIG.15 illustrates a logic circuit inside cell B3 in FIG.11;
FIG.16 illustrates a logic circuit inside cell B4 in FIG.11;
FIG.17 illustrates a logic circuit inside cell A of the data processing apparatus according to the above described embodiment; and
FIG.18 illustrates a logic circuit inside cell B of the data processing apparatus according to the above described embodiment.

### Best Mode for Carrying Out the Invention

It is an essence of the present invention that many cells for performing ALU processing and bit processing are arranged, each cell includes n-bit input/output ports, the cells are connected through a network with n-bit buses, and bits of orders irrelevant to outputs are fixed to "0" or "1" when the number of output bits is smaller than n in cells performing bit processing.

Hereinafter, an embodiment of the present invention will be explained in detail with reference to the accompanying drawings.

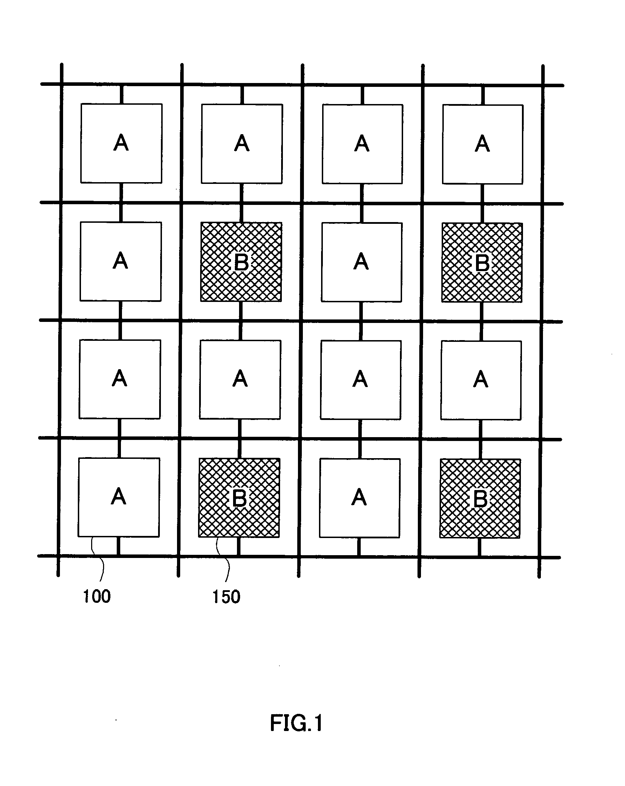

(Embodiment)
In this embodiment, as shown in FIG.1, a data processing apparatus is configured by arranging cells A 100 which perform ALU processing and cells B 150 which perform bit processing at a ratio of 3: 1. Furthermore, in FIG. 1, suppose both cell A 100 and cell B 150 have four-bit input/output ports and the bus width is four bits.

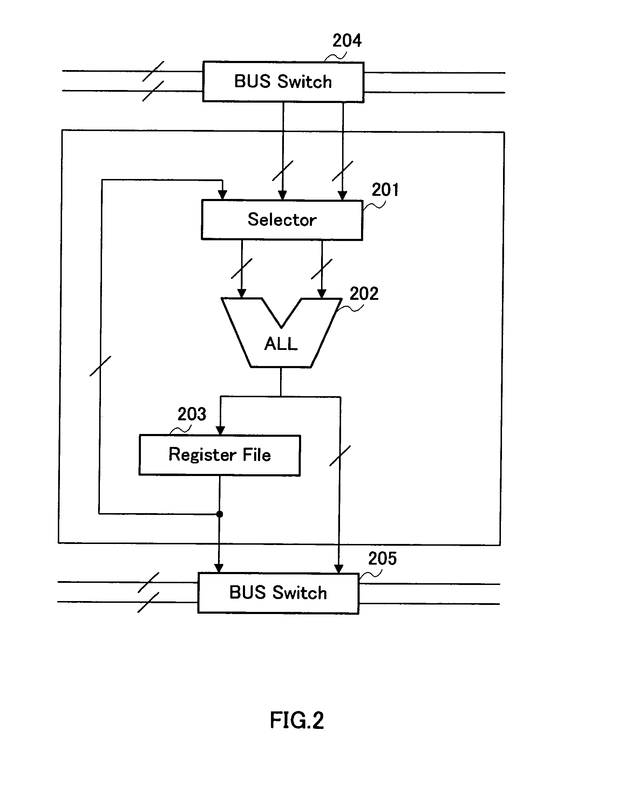

Cell A 100 is configured with selector 201, ALU 202, register file 203 and bus switches 204, 205 as shown in FIG.2. Cell A 100 stores configuration information for controlling circuit elements in the cell, that is, information showing instructions executed by ALU 202, the connection method of selector 201 and connection method of bus switches 204, 205 in a configuration memory (not shown). By rewriting the contents of the configuration memory, it is possible to reconfigure the cell function and a network between cells.

According to the configuration information, selector 201 selects two values to be input to ALU 202 from among values input from the buses or stored in register file 203. ALU 202 performs an operation specified by the configuration information out of addition, subtraction, logical OR, AND, exclusive OR and one-bit shift on the two input data. Register file 203 stores the operation result of ALU 202. Bus switches 204, 205 transfer the outputs from ALU 202 and register file 203 according to the configuration information.

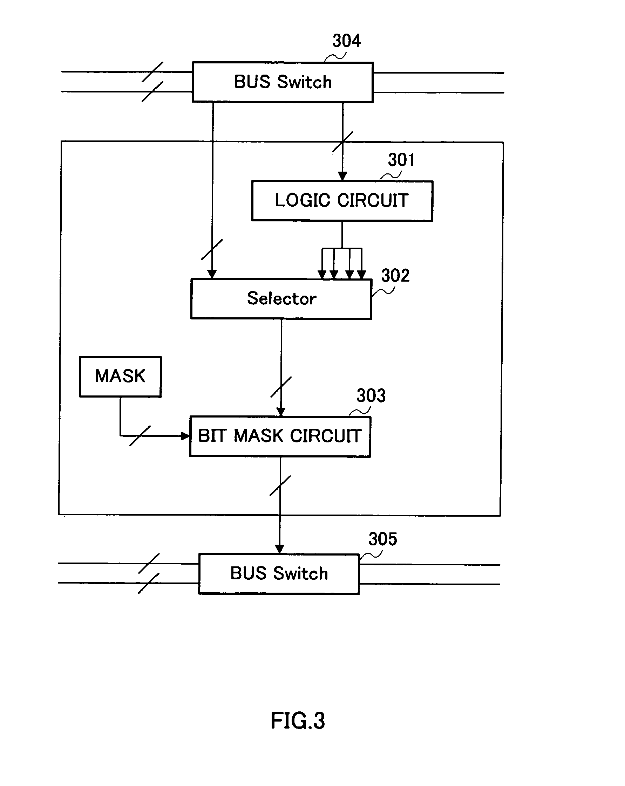

Cell B 150 is configured with logic circuit 301, selector 302, bit mask circuit 303 and bus switches 304, 305 as shown in FIG.3. Cell B 150 stores configuration information for controlling circuit elements in the cell, that is, information showing logic functions executed by the logic circuit, the connection method of the selector, the connection method of the bus switches and the value of a mask used in the bit mask circuit in a configuration memory (not shown).

Logic circuit 301 is a reconfigurable circuit with four inputs and one output and performs logical operation specified by the configuration information. Selector 302 selects an input to bit mask circuit 303 according to the configuration information. Bit mask circuit 303 fixes the specific bit of the output to "0" or "1" by performing an AND operation or OR operation with the mask value according to the configuration information. Bus switches 304, 305 transfer the outputs from the bit mask circuit according to the configuration information.

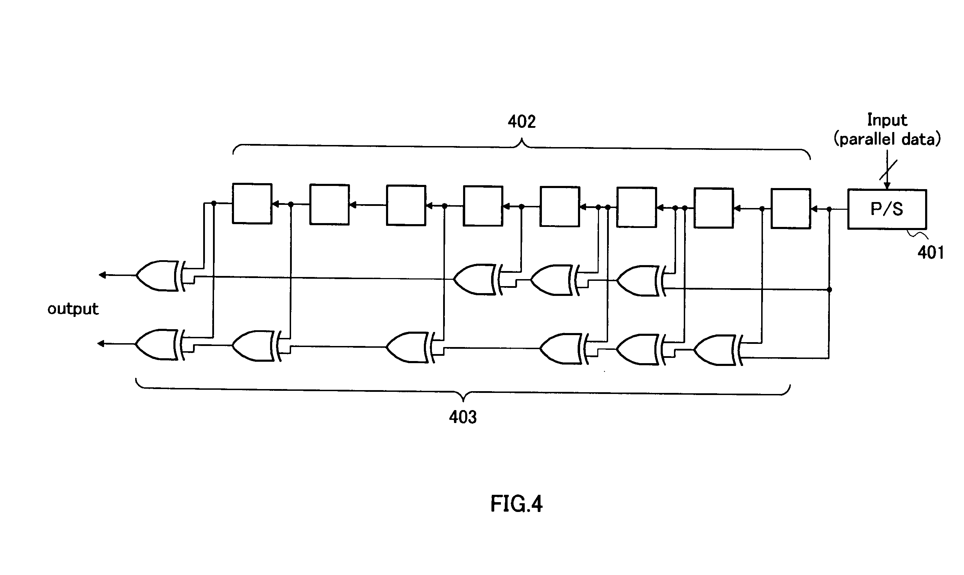

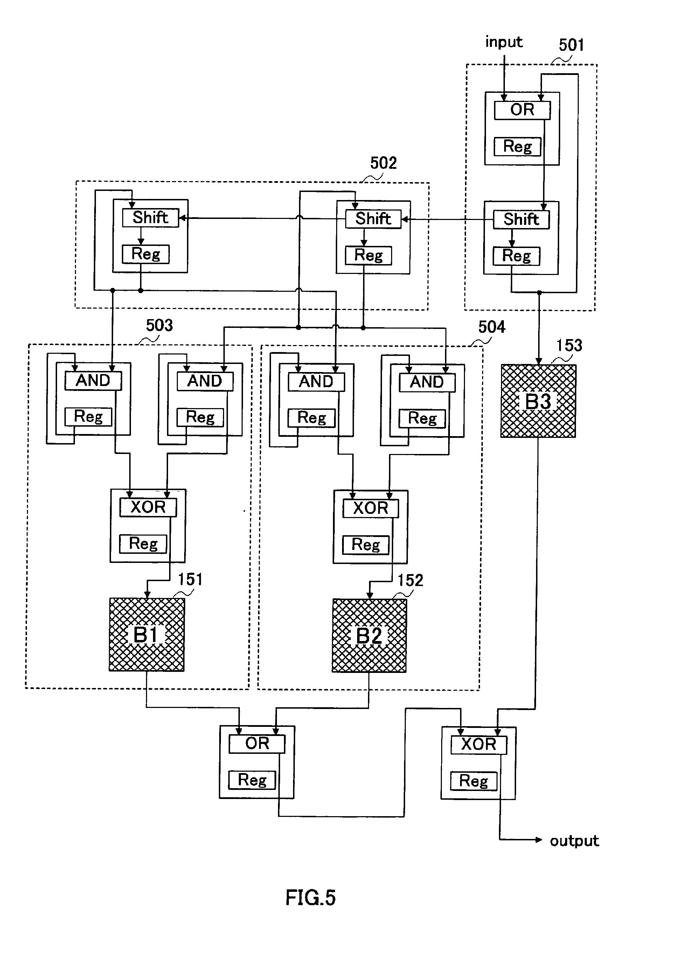

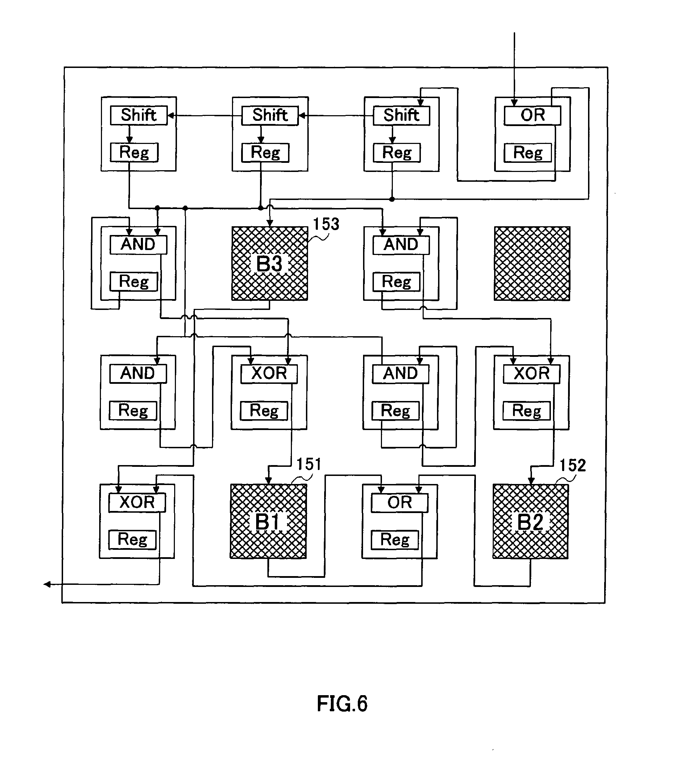

Hereinafter, cases (FIG.5, FIG.6) where a convolutional coding circuit shown in FIG.4 is constructed by the data processing apparatus in FIG.1 will be explained as a first example. FIG.6 illustrates a circuit equivalent to that in FIG.5 mapped to the array in FIG.1.

In FIG.5, circuit 501 realizes parallel-serial conversion circuit 401 in FIG.4, circuit 502 realizes eight-bit shift register 402 in FIG.4 and circuits 503, 504 realize eight-bit input parity tree 403 in FIG.4 respectively.

Furthermore, in FIG.5, four-bit parallel data is input once to four clocks and coded data is output to the lower two bits of the four-bit bus.

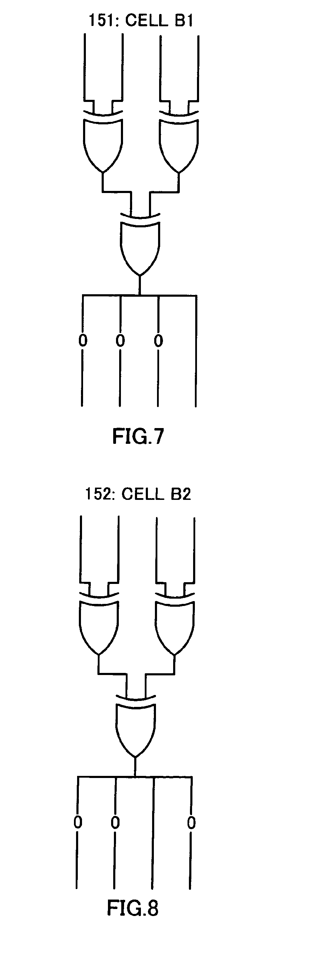

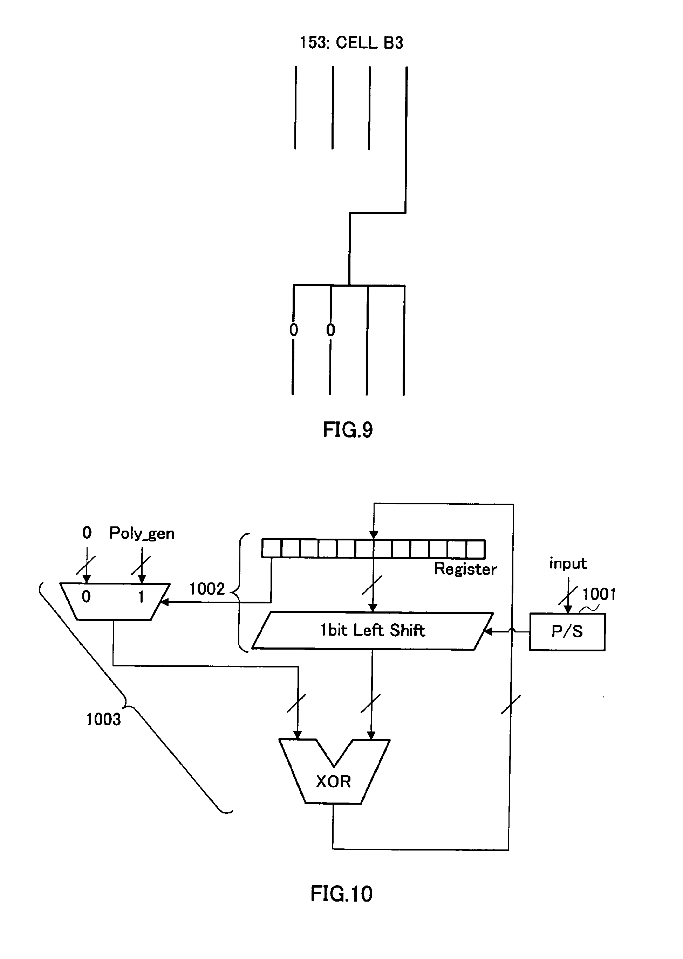

FIGs. 7, 8 and 9 show operations executed inside cell B1 151, cell B2 152 and cell B3 153 in FIG.5. Cell B1 151 in FIG.7 performs a four-bit input parity calculation by logic circuit 301, further performs an AND operation with "0001" on the signal divided into four bits by bit mask circuit 303, outputs one bit of the operation result to the least significant bit and outputs "0" to the other bits. Cell B2 152 in FIG.8 performs a four-bit input parity calculation by logic circuit 301, further performs an AND operation with "0010" on the signal divided into four bits by bit mask circuit 303, outputs one bit of the operation result to the second order bit and outputs "0" to the other bits. Cell B3 153 in FIG.9 extracts the most significant bit of the input by logic circuit 301, divides it into four bits, performs an AND operation with "0011" by bit mask circuit 303, outputs the same value as that of the most significant bit of the input to the least significant bit and second order bit and outputs "0" to the other bits.

Here, realizing the same function as that of cell B1 151 using cell A 100 requires five cells A 100. Furthermore, realizing the same function as that of cell B2 152 using cell A 100 requires five cells A 100. Furthermore, realizing the same function as that of cell B3 153 using cell A 100 requires two cells A 100.

Furthermore, when a convolutional coding circuit is installed in the above described conventional structure in (1), an inter-array communication between a structured array (bussed array) and non-structured array (bit processing array) increases, and therefore it is difficult to use these two arrays in conjunction with each other and it is considered that all circuits are eventually mapped to the non-structured array. As a result, the amount of configuration data increases, the operable speed of the circuit decreases and the advantage over FPGA is lost.

Furthermore, when a convolutional coding circuit is mounted in the above conventional structure in (2), the number of cells (number of processor elements) equivalent to that of the present invention is required, each cell becomes more complicated than the present invention, the amount of wiring increases by having two kinds of buses, the area increases and the amount of configuration data increases.

In this way, the data processing circuit of the present invention arranges many cells for performing ALU processing and cells for performing bit processing, each cell has n-bit input/output ports and connects the respective cells through a network with n-bit buses.

This makes it possible to perform a plurality of types of bit operations with a single cell which performs bit processing, execute ALU processing and bit processing efficiently, realize high-speed and parallel processing and realize a convolutional coding circuit with a smaller number of cells. Furthermore, it is possible to use a network unified with n bits, thereby reduce the amount of wiring, simplify the internal structure of cells and the network, reduce the area and reduce the amount of necessary configuration data.

Moreover, by dividing and arranging bit processing cells and ALU processing cells, it is possible to disperse a communication and reduce the amount of global wiring.

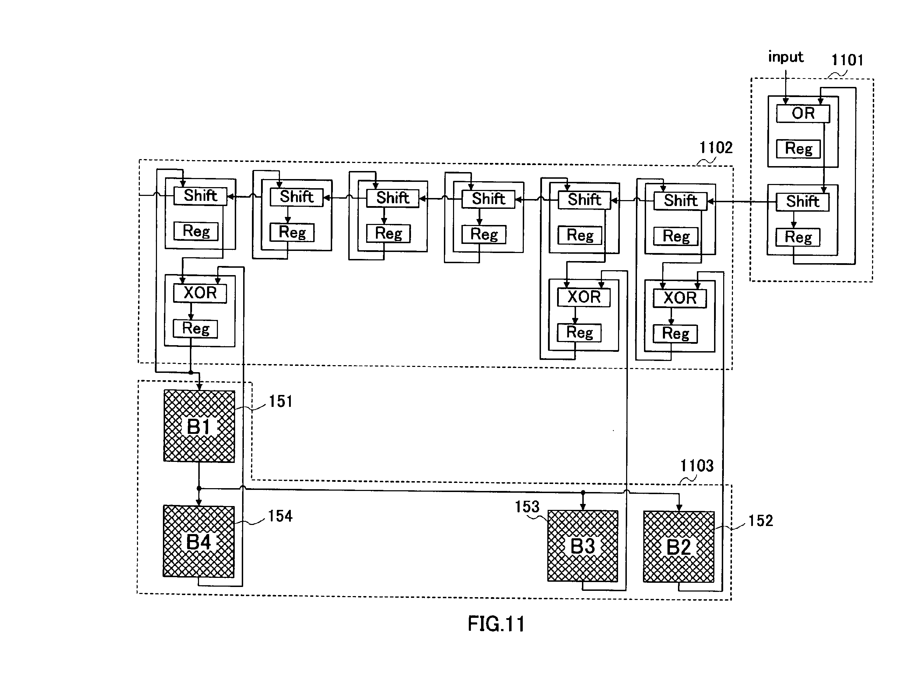

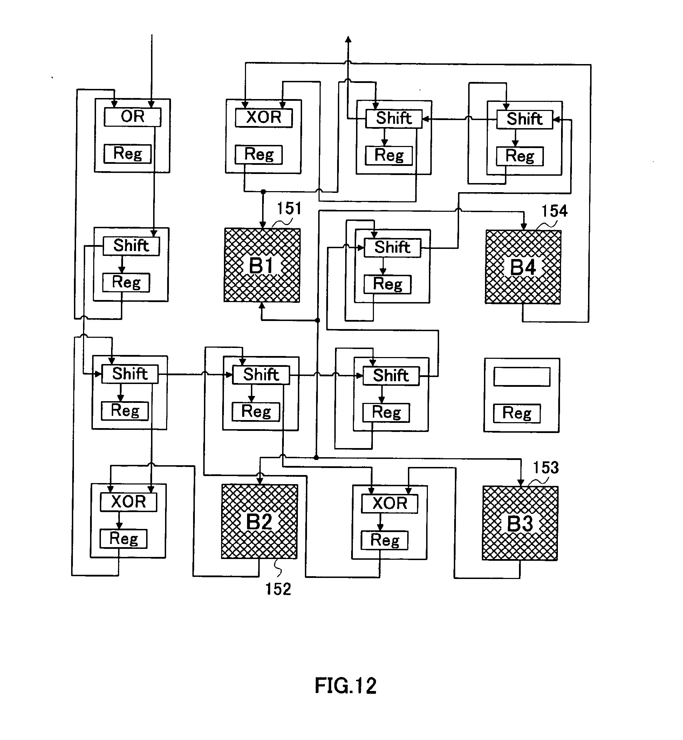

Next, cases (FIG.11, FIG.12) where a CRC calculation circuit shown in FIG.10 is constructed of the data processing apparatus in FIG.1 will be explained as a second example. FIG.12 shows a circuit equivalent to that in FIG.11 mapped to the array in FIG.1.

In FIG.11, circuit 1101 realizes parallel-serial conversion circuit 1001 in FIG.10, circuit 1102 realizes CRC calculation circuit 1002 made up of a twenty four-bit shift register in FIG.10 and circuit 1103 realizes circuit 1003 that creates a generating polynomial. Cell B2 152, cell B3 153 and cell B4 154 store bit expressions of generating polynomials as masks and circuit 1103 outputs a generating polynomial when the most significant bit of the shift register is "1" and outputs "0" when the most significant bit is "0".

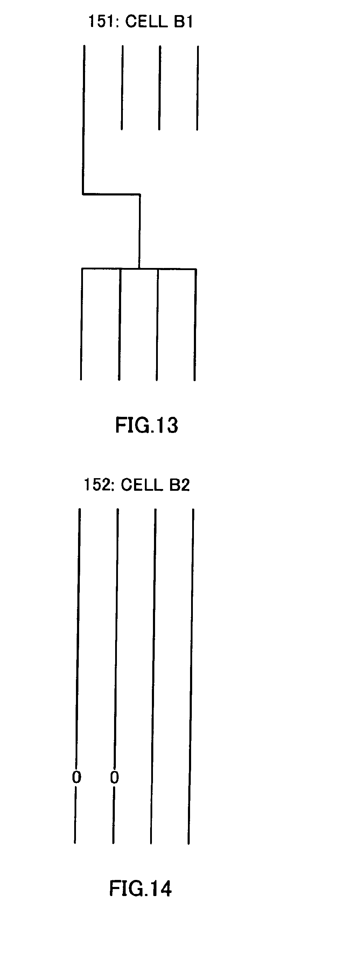

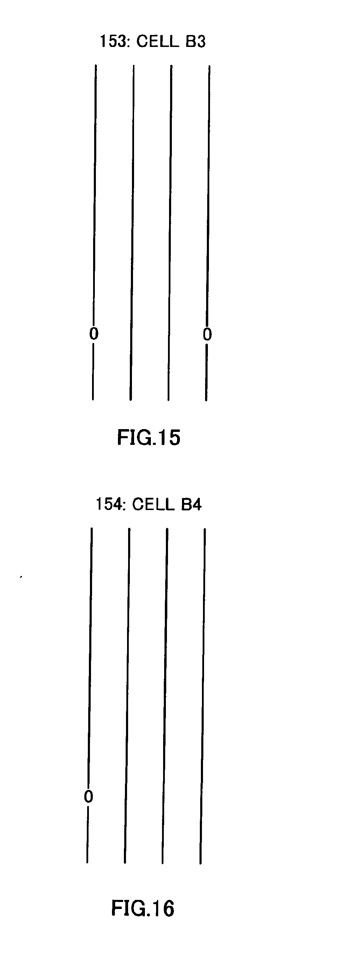

FIGs.13, 14, 15 and 16 illustrate operations executed inside cell B1 151, cell B2 152, cell B3 153 and cell B4 154 in FIG.11. Cell B1 151 in FIG.13 extracts the most significant bit of the input and outputs it to the bit of each order. Cell B2 152 in FIG.14 outputs the inputs of the least significant bit and second order bit as they are and outputs "0" to the other bits. Cell B3 153 in FIG.15 outputs the inputs of the second order bit and third order bit as they are and outputs "0" to the other bits. Cell B4 154 in FIG.16 outputs the inputs of the least significant bit, second order bit and third order bit as they are and outputs "0" to the most significant bit.

Since cell B2 152, cell B3 153 and cell B4 154 are assigned AND operations with constant values, cells A 100 can be used instead of these cells.

This embodiment has explained the case where cells A 100, cells B 150 are arrayed in a grid-like form, but there is no limitation to the cell arrangement condition of the present invention and cells may be arranged in other regular structures such as a tree structure.

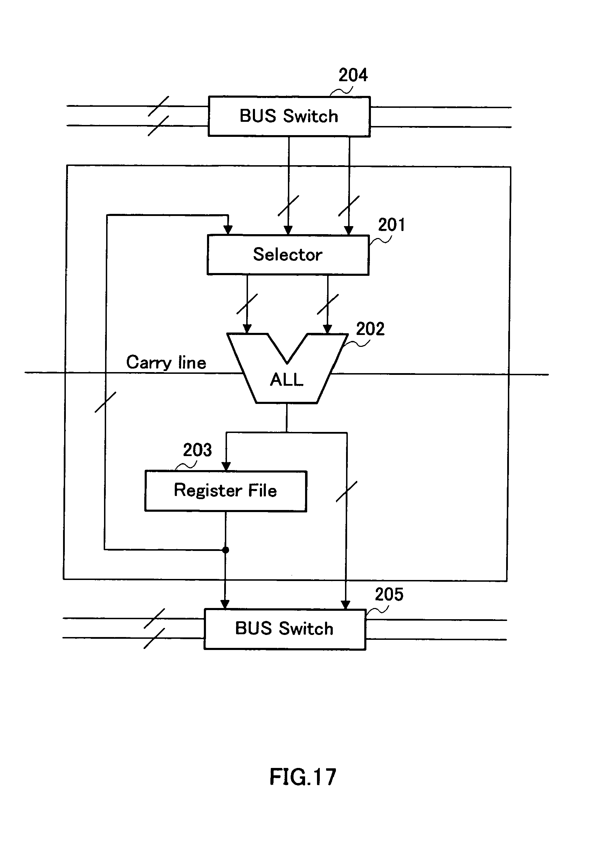

Furthermore, as shown in FIG.17, the present invention allows a carry-out of ALU in one cell A 100 and carry-in of ALU in another cell A 100 to be connected. This allows operations of n or more bits to be executed.

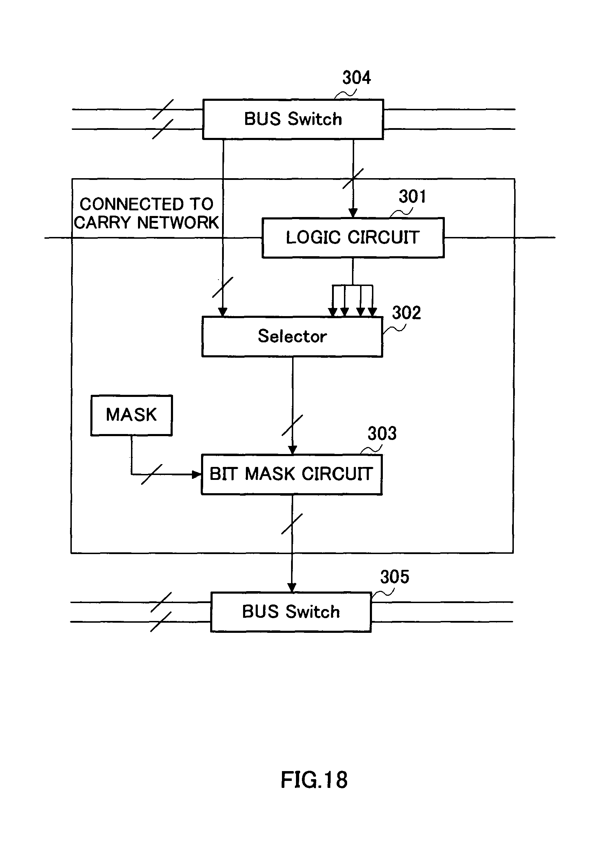

Furthermore, the present invention can use logic circuit 301 of cell B 150 as a circuit that realizes an arbitrary logic function with (n+1)-bit inputs and 1-bit output by adding one bit to logic circuit 301 of cell B, use a carry-out of ALU in one cell A 100 as an input to cell B 150 and connect the output of logic circuit 301 of cell B 150 to a carry-in in another cell A 100 as shown in FIG.18. As a result, a carry-out of cell A 100 is input to the one-bit part added to logic circuit 301 of cell B 150. This improves consistency with cell A 100 in FIG.17 and maintains uniformity of a network topology (shape).

Furthermore, the present invention can realize a logic function using a lookup table at cell B 150.

The present application is based on Japanese Patent Application No.2003-357994, filed on October 17, 2003, the entire content of which is expressly incorporated by reference herein.

### Industrial Applicability

The present invention is suitable for use in a data processing apparatus combining a bussed ALU processing part and bit processing part, provided with reconfigurable data paths.
FIG.3
301 LOGIC CIRCUIT
MASK
303 BIT MASK CIRCUIT
FIG.7
151: CELL B1
FIG.8
152: CELL B2
FIG.9
153: CELL B3
FIG.13
151: CELL B1
FIG.14
152: CELL B2
FIG.15
153: CELL B3
FIG.16
154: CELL B4
FIG.18
CONNECTED TO CARRY NETWORK
301 LOGIC CIRCUIT
MASK
303 BIT MASK CIRCUIT

## Claims

1. A data processing apparatus comprising:
a plurality of first cells having n-bit (n: natural number) input/output ports and performing ALU processing; and
one or a plurality of second cells having n-bit input/output ports and performing bit processing,
wherein the cells are connected through a
network with n-bit buses.

2. The data processing apparatus according to claim 1, wherein said second cell fixes bits of orders irrelevant to outputs to "0" or "1" when the number of output bits is smaller than n.

3. The data processing apparatus according to claim 2, wherein said second cell comprises:
a circuit that realizes an arbitrary logic function with n-bit inputs and 1-bit output; and
a circuit that divides the output into n bits and masks the divided n-bit signals arbitrarily.

4. The data processing apparatus according to claim 1, wherein a carry-out of ALU in one first cell and a carry-in of ALU in another first cell are connected.

5. The data processing apparatus according to claim 4, wherein:
a logic circuit of the second cell is used as a circuit that realizes an arbitrary logic function with (n+1)-bit inputs and 1-bit output;
a carry-out of ALU in one first cell is used as an input to said second cell; and
the output of the logic circuit of said second cell is connected to a carry-in in another cell A.

## Amended claims

### Amended claims under Art. 19.1 PCT

1. A data processing apparatus comprising:
a plurality of first cells having n-bit (n: natural number) input/output ports and performing ALU processing; and
one or a plurality of second cells having n-bit input/output ports and performing bit processing,
wherein the cells are connected through a
network with n-bit buses.

2. The data processing apparatus according to claim 1, wherein said second cell fixes bits of orders irrelevant to outputs to "0" or "1" when the number of output bits is smaller than n.

3. The data processing apparatus according to claim 2, wherein said second cell comprises;
a circuit that realizes an arbitrary logic function with n-bit inputs and 1-bit output; and
a circuit that divides the output into n bits and masks the divided n-bit signals arbitrarily.

4. The data processing apparatus according to claim 1, wherein a carry-out of ALU in one first cell and a carry-in of ALU in another first cell are connected.

5. (Amended)
The data processing apparatus according to claim 4, wherein:
a logic circuit of the second cell is used as a circuit that realizes an arbitrary logic function with (n+1)-bit inputs and 1-bit output;
a carry-out of ALU in one first cell is used as an input to said second cell; and
the output of the logic circuit of said second cell is connected to a carry-in in another first cell.
